# EUROPEAN PATENT APPLICATION

(11) **EP 1 782 678 A2**
(43) Date of publication of application: **09.05.2007**
(21) Application number: 06123460.5
(22) Date of filing: 03.11.2006
(51) Int. Cl.: A01F 25/18

(54) **Device for removing and processing silage for cattle**

(30) Priority: 03.11.2005 NL 1030339
(71) Applicant: Trioliet Mullos B.V., 7575 BE Oldenzaal (NL)
(72) Inventor: Liet, Cornelis Hendricus, 7581 TJ, Losser (NL); Van der Plas, Nicolaas, 7576 WX, Oldenzaal (NL)
(74) Representative: de Vries, Johannes Hendrik Fokke

(57) **Abstract**

An apparatus for removing and processing silage comprises a mobile chassis (1) with two or more wheels, a removing unit (7) for removing silage from a stock thereof, which removing unit (7) comprises a pivot arm (8) which is pivotally supported about a pivot axis (10) at one end and which carries a removing means (11) at its free end, a mixing bin (13) for removed silage and conveyor means (15) for conveying removed silage to the mixing bin (13). Weighing means (14,18) are provided for weighing the silage that has been collected in the mixing bin. The conveyor means (15) and the mixing bin (13) are connected to each other and are supported on the chassis, with the weighing means comprising weighing sensors (14) disposed between the mixing bin and the chassis.

## Description

The invention relates to an apparatus for removing and processing silage, said apparatus comprising a mobile chassis with two or more wheels, a removing unit for removing silage from a stock thereof, which removing unit comprises a pivot arm which is pivotally supported about a pivot axis at one end and which carries a removing means at its free end, a mixing bin for removed silage and conveyor means for conveying removed silage to the mixing bin, wherein weighing means are provided for weighing the silage that has been collected in the mixing bin.

Such an apparatus is described in the present Applicant's prior Dutch patent application No. 1,028,732. In this known apparatus, the width of the removing means corresponds to the width of the mixing bin, whilst the width of the conveyor means is about half the width of the mixing bin. As a result, it takes comparatively much time to convey the removed silage to the mixing bin. When the user of the apparatus wants to remove a predetermined amount of silage from the stock thereof, he drives the apparatus to the stock of silage and cuts off a slice having a thickness that is to be determined by the user. It is very important in this connection that precisely the desired amount of silage be loaded into the mixing bin. Because of this, a comparatively large amount of silage may still be present on the conveyor means when the desired weight thereof has already been loaded into the mixing bin. If said remaining part is not directly used, the quality of the silage will deteriorate. Using the known apparatus requires a great deal of experience on the part of the user in order to collect a predetermined amount of silage in the mixing bin without any loss of product and within a short time, while it remains difficult to load precisely the desired amount of silage into the mixing bin.

The object of the invention is to provide an improved apparatus of the kind referred to in the introductory paragraph, by means of which an amount of silage of a desired weight can be collected in the mixing bin in a quick and precise manner.

In order to accomplish that object, the apparatus is characterised in that the conveyor means and the mixing bin are connected to each other and are supported on the chassis, with the weighing means comprising weighing sensors disposed between the mixing bin and the chassis.

The invention will now be explained in more detail with reference to the drawing, which very schematically shows a few embodiments of the apparatus according to the invention.

Fig. 1 is a side view of a first embodiment of the apparatus according to the invention.

Fig. 2 is a side view corresponding to Fig. 1 of a second embodiment of the apparatus according to the invention.

Figs. 3A and 3B are larger-scale views of the connection between the conveyor means and the mixing bin.

Fig. 4 is a front view of a third embodiment of the apparatus according to the invention.

Figs. 5 and 6 are a plan view and a side view, respectively, of a fourth embodiment of the apparatus according to the invention.

Fig. 7 is a side view of an embodiment of the apparatus of Figs. 5 and 6, which is configured as a self-driving apparatus.

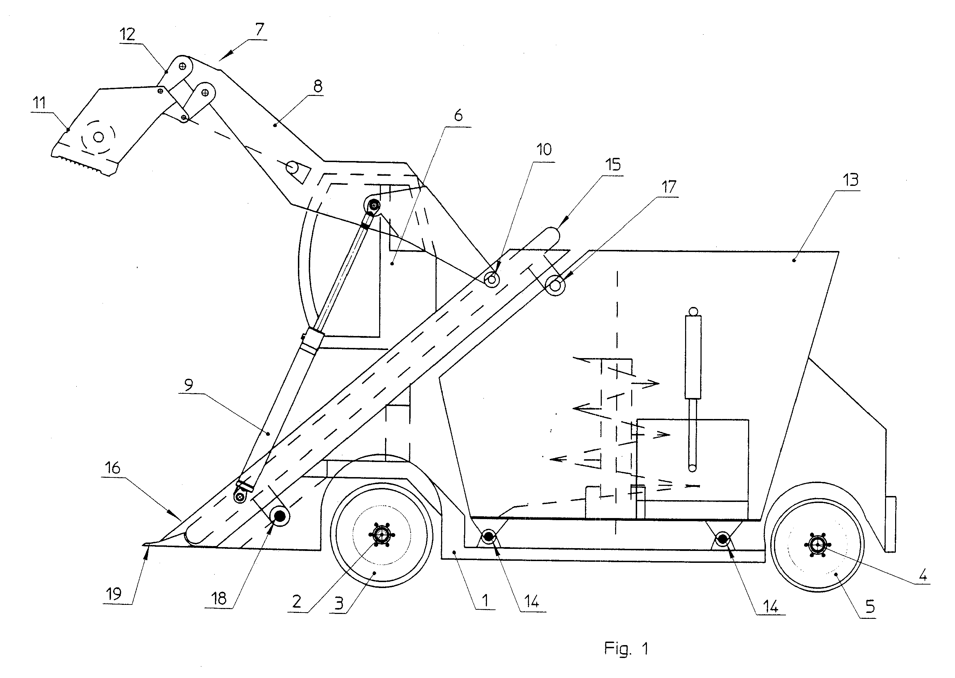

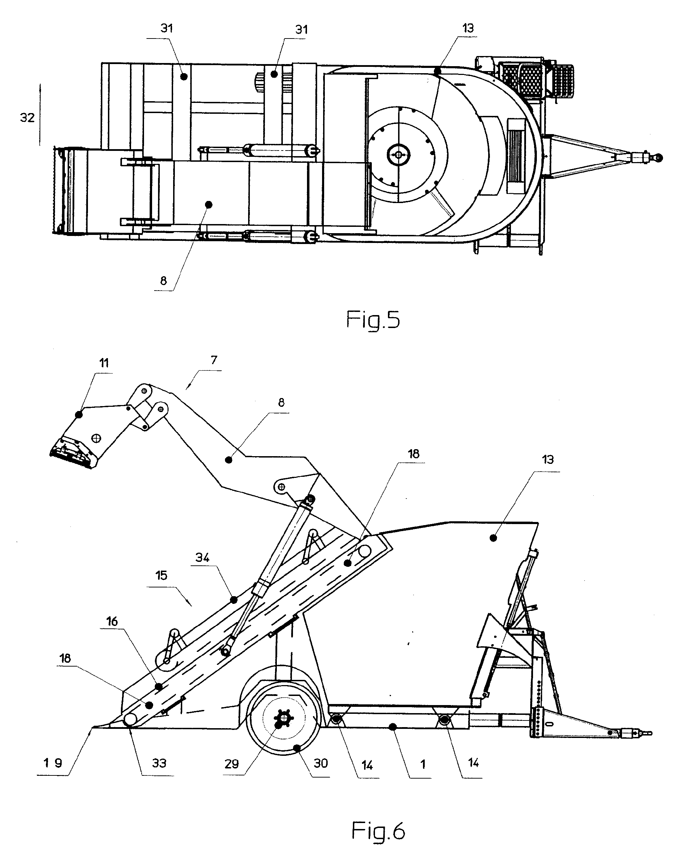

Fig. 1 schematically shows in side view an embodiment of an apparatus for removing and processing silage for cattle, which apparatus comprises a mobile chassis 1 having a front axle 2 with front wheels 3 and a rear axle 4 with rear wheels 5. The apparatus furthermore comprises a cabin 6 for a driver, who can control all the functions of the apparatus from this cabin. With the apparatus that is shown in Fig. 1, the front axle is a driven axle, and the rear wheels 5 can be steered in a manner that is not shown. As an alternative to the embodiment that is shown in Fig. 1, which is configured as a so-called self-driving apparatus, Figs. 5 and 6 show a tractor-drawn embodiment that does not have a driving motor of its own.

The apparatus comprises a removing unit 7 for removing silage from a stock thereof (not shown). Said removing unit 7 is provided with a pivot arm 8, which can be pivoted upwards and downwards by means of a cylinder-piston assembly 9. The pivot arm 9 is pivotally supported about a pivot pin 10 at one end and carries a removing means 11 embodied as a cutting board at its free end. Said cutting board 11 is movably connected to the free end of the pivot arm 8. The construction of the removing unit 7 is described in more detail in the aforesaid Dutch patent application No. 1,028,732 and will not be described in more detail herein.

A mixing bin 13 is supported on the chassis 1, and weighing sensors 14 are disposed between the mixing bin 13 and the chassis 1, which weighing sensors are of a design that is known per se. Said weighing sensors 14, of which there are for example four present between the mixing bin 13 and the chassis 1 (two on each side of the mixing bin), form part of weighing means (not shown) that also comprise a display screen mounted in the cabin 6.

Conveyor means 15 are furthermore provided on the chassis 1, which conveyor means are capable of depositing the silage that has been removed from a stock of silage by the removing unit 7 into the mixing bin 13. Said conveyor means 15 comprise a frame 16 (not shown in detail), whose upper end is pivotally connected to the mixing bin 13 at the location indicated at 17 and whose lower end is supported on the chassis 1 via weighing sensors 18. Said weighing sensors 18 likewise form part of the weighing means (not shown). This means that said weighing means can display the weight of the removed silage that is present on the conveyor means 15 and in the mixing being 13 on the display screen in the cabin 6. This enables the user to stop the removing process once the desired weight has been reached, taking into account the weight of the silage that is already present on the conveyor means 15. As a result, no silage is lost and the desired amount of silage can be loaded into the mixing bin 13 with great precision in a short time.

It is noted that the weighing sensors 14 that are present at the front side of the mixing bin 14 may also be provided in the connection 17 between the frame 16 of the conveyor means 15 and the mixing bin 13. The conveyor means 15 may be configured as a conveyor belt comprising carriers extending transversely to the direction of movement of the conveyor belt or as conveyor chains with carriers extending therebetween, or have any other suitable configuration. The conveyor means 15 may be configured in the form of a so-called cassette, of which pulleys for the conveyor belt form part, so that said cassette, which has a frame of its own, can be mounted/dismounted in/from the frame 16 as a whole.

When using the apparatus described with reference to Fig. 1, the user drives the apparatus to a stock of silage, and moves down an insertion plate 19 present at the bottom end of the frame by raising the front axle 2, which can be moved upwards and downwards, until the insertion plate 19 is at least substantially level with the bottom. The insertion plate 19 can then be forced under the stock of silage and the user can determine the thickness of the slice that is to be cut off inter alia by moving the cutting board 11 with respect to the pivot arm 8. The removed silage is loaded into the mixing bin by the conveyor means 15, and the user can see on the display screen of the weighing means when the weight of the silage on the conveyor means 15 and in the mixing bin 13 has reached the desired value. The speed at which silage is being removed can be reduced, if desired, when the weight of the silage has almost reached the desired value.

Alternatively, the apparatus may also be configured without the weighing sensors 18, if it is possible to limit the amount of silage that is present on the conveyor means during the loading of the mixing bin. To this end, the conveyor means 15 can preferably operate at a comparatively high conveying speed of at least 0.5 m/s. Good results are obtained with a conveying speed in excess of 1 m/s. An advantageous conveying speed is at least substantially 2 m/s. The conveyor means 15 that are used in that case preferably have a width that at least substantially corresponds to the width of the removing element 11 and that of the mixing bin 13.

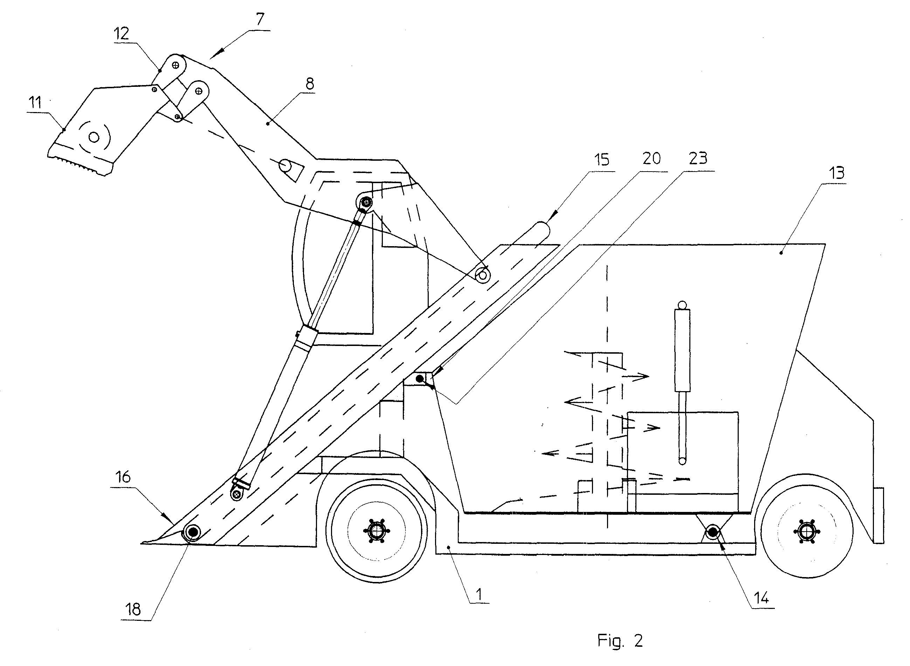

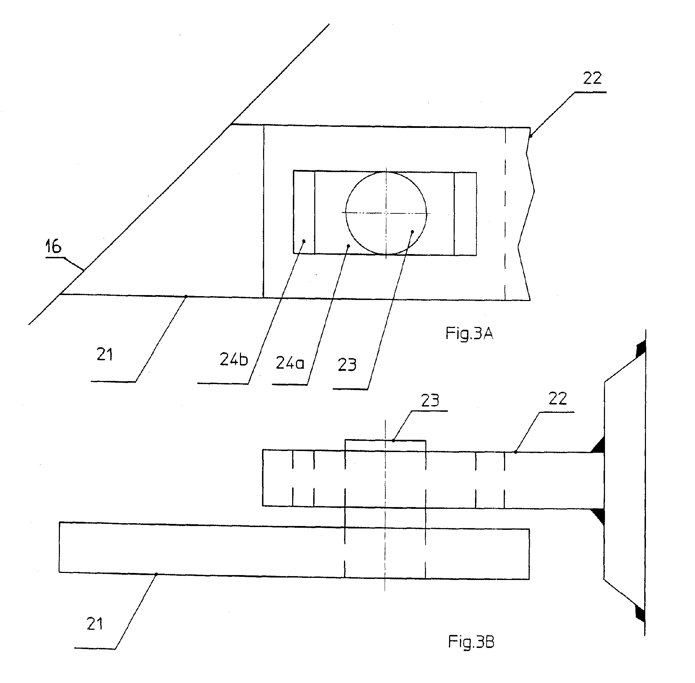

Fig. 2 shows an embodiment of the apparatus according to the invention, which is configured in substantially the same manner as an apparatus that is shown in Fig. 1. Like parts are indicated by the same numerals and will not be described again. In the embodiment of Fig. 2, a connection 20 is provided between the frame 16 of the conveyor means 15 and the mixing bin 13, which connection is schematically shown in larger-scale view in Fig. 3A and 3B. The connection 20 comprises an arm 21 that is mounted to the frame 16 of the conveyor means 15 and an arm 22 that is mounted to the mixing bin 13. Said arms 21, 22 are connected to each other by means of a weighing sensor in the form of a pin 23, which on the one hand fits a hole in the arm 21 and which on the other hand fits a hole in a sliding piece 24a, which is movably (substantially in horizontal direction) accommodated in a slotted hole 24b of the arm 22. The weighing sensor 23 forms part of the weighing means. Weighing sensors 14 are provided at the rear side of the mixing bin 13, and the bottom end of the frame 16 is supported on the chassis 1 via the weighing sensors 18. Also the apparatus according to the embodiment of Fig. 2 may be configured without weighing sensors 18 if conveyor means that can operate at a comparatively high conveying speed as described above, is used.

In an alternative to this embodiment (not shown), the slotted hole 24b is vertically oriented, and the sliding piece 24a can move freely in the slotted hole 24b. The weighing sensors 14 and 18 can determine the weight of the silage on the conveyor means 15 and that of the silage in the mixing bin 13 independently in that case. The pin 23 is not configured as a weighing sensor in this embodiment.

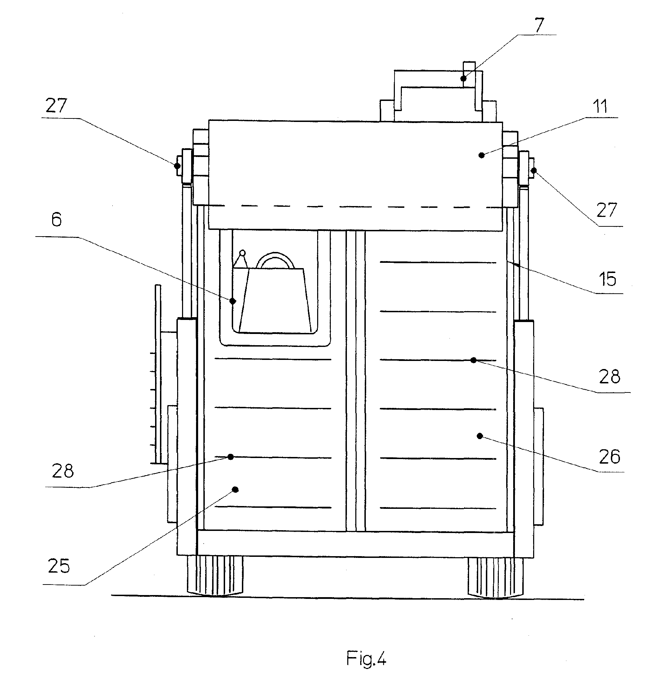

Fig. 4 schematically shows a front view of an embodiment of the apparatus according to the invention, which substantially corresponds to the apparatus that is shown in Fig. 1. In this embodiment, the conveyor means 15 are configured with two side-by-side conveyor belts 25, 26, each having their own drive unit 27. Alternatively it is possible to configure the conveyor belts 25, 26 with a common drive unit. The construction of the conveyor means 15 with two conveyor belts 25, 26 as described herein has this advantage that the conveyor belts run well in the frame 16 because of the use of an advantageous width/length ratio, whilst in addition one of the two belts 25, 26 can still be used in the event of the other belt becoming defective. If desired, more than two side-by-side conveyor belts may be used. Although the conveyor belts are fitted with carriers 28 in the embodiment that is shown in Fig. 4, it is also possible to use two side-by-side conveyor means that are configured with conveyor chains and carriers mounted therebetween. The two conveyor belts 25, 26 form one conveyor unit, whilst in the event of a defect or the like one of the conveyor belts can be easily dismounted and be replaced by a new unit.

Figs. 5 and 6 show an embodiment of the apparatus according to the invention which is configured as a tractor-drawn apparatus comprising a chassis 1 provided with one axle 29 with wheels 30. The chassis 1 may also be designed to have more axles, of course. Like the apparatuss described in the preceding embodiment, the apparatus that is shown in Figs. 5 and 6 comprises a mixing bin 13 that is supported on the chassis 1, so that it is possible in this embodiment, too, to determine the weight of the silage that is present on the conveyor means 15 as well as the weight of the silage that is present in the mixing bin 13. In the apparatus that is shown in Figs. 5 and 6, the width of the conveyor means 15 approximately equals half the width of the mixing bin 13. The frame 16 of the conveyor means 15 is movably mounted on guide beams 31 in this embodiment, so that the conveyor means 15 are movable transversely to the driving direction of the apparatus, as is schematically indicated by the arrow 32. The removing unit 7 also has a width amounting to approximately half the width of the mixing bin 13. When using the apparatus according to Figs. 5 and 6, the user drives the apparatus under a stock of silage by means of a tractor (not shown) with the insertion plate 19 positioned at approximately ground level, which position has been realised by retracting the axle 29. A gutter 33 is formed in said insertion plate 19, in which gutter the lower end of the conveyor means 15 is accommodated. Said gutter 33 is open on either side thereof, so that the reciprocating movement of the conveyor means 15 will not be impeded by silage material that remains behind in the gutter 33.

In the embodiments that are described herein, the conveyor means 15 may be configured with two conveying elements disposed one above another, for example conveyor belts, between which conveyor belts a space is present, through which space the silage is conveyed. In Fig. 6 the upper conveying element indicated at 34 is capable of reciprocating movement. The use of conveyor means thus configured increases the conveying capacity and makes it possible to dispose the conveyor means at a steeper angle, thereby reducing the length of the apparatus and making it more easily manoeuvrable. Alternatively it is also possible to use a bracket instead of the upper conveying element, which bracket, in combination with the lower conveying element, defines the space through which the silage is conveyed. Said bracket pushes the silage onto the conveying element, so that the silage cannot roll down and will be conveyed to the mixing bin 13.

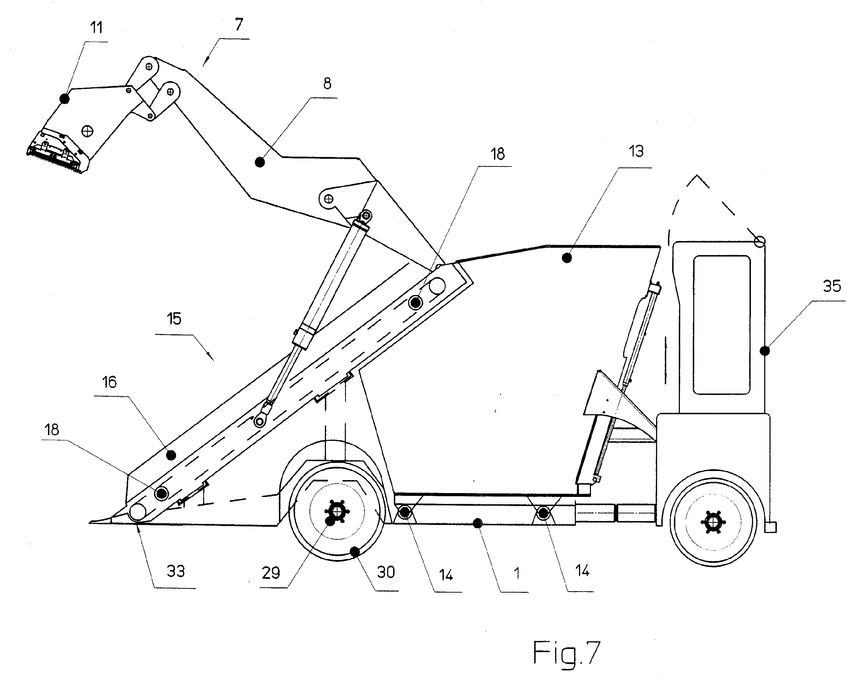

Fig. 7 shows an embodiment of the apparatus according to the invention, which is configured in substantially the same manner as the apparatus that is shown in Figs. 5 and 6. The apparatus according to this embodiment is a self-driving apparatus comprising a cabin 35 whose upper side is positioned substantially at the same level as the upper edge of the mixing bin 13. The cabin 35, which may be configured with a transparent hatch, can be moved up and down, so that the cabin can be moved to a higher position while silage is being removed from the stock of silage, providing the user with a good view of the removing unit 7 and the conveyor means 15.

In the embodiments according to Figs. 5-7, too, the apparatus may be configured without the weighing sensors 18 if conveyor means having a comparatively high conveying speed are used, as described above.

It is noted that a driven mixing screw is mounted in the mixing bin in the above-described embodiments, as is indicated in a dotted line in Figs. 1 and 2 and in the plan view of Fig. 5. If desired, however, other mixing means may also be used.

The apparatus as described herein makes it possible to load a desired amount of silage into the mixing bin with a high degree of precision. This makes it possible to prepare mixtures of different types of fodder having exactly the desired composition.

The invention is not restricted to the embodiments as described above, which can be varied in several ways without departing from the scope of the invention as defined in the claims.

## Claims

1. An apparatus for removing and processing silage, said apparatus comprising a mobile chassis with two or more wheels, a removing unit for removing silage from a stock thereof, which removing unit comprises a pivot arm which is pivotally supported about a pivot axis at one end and which carries a removing means at its free end, a mixing bin for removed silage and conveyor means for conveying removed silage to the mixing bin, wherein weighing means are provided for weighing the silage that has been collected in the mixing bin, **characterized in that** the conveyor means and the mixing bin are connected to each other and are supported on the chassis, with the weighing means comprising weighing sensors disposed between the mixing bin and the chassis.

2. An apparatus according to claim 1, wherein the conveying speed of the conveyor means is at least 0.5 m/s, in particular 1 m/s, preferably at least substantially 2 m/s.

3. An apparatus according to claim 1 or 2, wherein the conveyor means comprise a frame that is movably connected to the mixing bin at the upper side, with one or more weighing sensors being provided in the movable connection between the upper end of the frame and the mixing bin.

4. An apparatus according to claim 3, wherein the movable connection comprises an arm that is connected to the frame and an arm that is connected to the mixing bin, wherein the weighing sensor comprises a pin which fits a hole in the arm and which is movably in horizontal direction accommodated in the other arm.

5. An apparatus according to any one of the preceding claims, wherein the conveyor means have a width that corresponds to the width of the mixing bin.

6. An apparatus according to any one of the preceding claims, wherein the conveyor means are configured with two or more side-by-side conveyor belts, each having their own drive unit.

7. An apparatus according to any one of the claims 1-4, wherein the width of the conveyor means is smaller than the width of the mixing bin, wherein the conveyor means are movably supported on the chassis in a direction transversely to the driving direction of the apparatus.

8. An apparatus according to any one of the preceding claims, wherein the width of the removing unit is smaller than the width of an insertion plate that is provided at the lower end of the conveyor means.

9. An apparatus according to any one of the preceding claims, wherein the conveyor means comprise two conveying elements disposed one above another, or one conveying element and a bracket positioned above said conveying element, which conveying element and which bracket define a space between them for conveying silage therethrough.

10. An apparatus according to any one of the preceding claims, wherein a cabin is provided, which cabin can move up and down and which may comprise a transparent hatch at the upper side.

11. An apparatus according to claim 11, wherein the weighing means are arranged for also weighing silage that is present on the conveyor means.
